# EUROPÄISCHE PATENTANMELDUNG

(11) **EP 0 874 099 A2**
(43) Veröffentlichungstag der Anmeldung: **28.10.1998**
(21) Anmeldenummer: 98107075.8
(22) Anmeldetag: 17.04.1998
(51) Int. Cl.: E04D 12/00, B32B 5/22

(54) **Diffusionsfolie, insbesondere in Form einer Unterspannbahn für Dächer**

(30) Priorität: 21.04.1997 DE 19716583
(71) Anmelder: Klöber, Johannes, 58256 Ennepetal (DE)
(72) Erfinder: Werner, Joachim, 44139 Dortmund (DE)
(74) Vertreter: Rieder, Hans-Joachim, Dr.

(57) **Zusammenfassung**

Die Erfindung bezieht sich auf eine Diffusionsfolie (1), insbesondere in Form einer Unterspannbahn für Dächer, mit auf einer Folienbreitseite (2) angeordneter Kunststoff-Armierung, welche in Art eines Abstandshalte-Gitters (G) gestaltet ist, das nur mit einem Bruchteil der Diffusionsfläche in Fesselungskontakt zu diesem steht, und schlägt zur Erzielung einer feuchteabtragungsgünstigen Lösung vor , daß das Abstandshalte-Gitter (G) aus einem unregelmäßigen Gewirr polydirektionaler, halbstarrer Fäden (5) besteht, die durch ihren schlaufenartig ineinander verflochtenen Verlauf Teilflächen (7) umrahmen, deren Summe ein Vielfaches ist der vom Fadenquerschnitt selbst eingenommenen Teilfläche, und in ihrer Größe überwiegend so sind, daß sie oberflächenspannungs-bedingt Wasserhäute (8) speichern.

## Beschreibung

Die Erfindung bezieht sich auf eine Diffusionsfolie, insbesondere in Form einer Unterspannbahn für Dächer, mit auf einer Folienbreitseite angeordneter Kunststoff-Armierung, welche in Art eines Abstandshalte-Gitters gestaltet ist, das nur mit einem Bruchteil der Diffusionsfläche in Fesselungskontakt zu diesem steht.

Eine Diffusionsfolie dieser Art ist durch die WO 96/18781 bekannt.

Die erstrebte Minimierung der Fesselungskontakte zwischen dem Abstandshalte-Gitter und der Diffusionsfolie ist dort durch möglichst schmale Gitterstege erreicht, die überdies Querdurchbrüche aufweisen. Es handelt sich dabei um brückenbogenartige, zur Diffusionsfolie hin offene Ausnehmungen. Die quer dazu verlaufenden Gitterstege sind querschnittskleiner ausgebildet und erstrecken sich frei beabstandet zur Oberseite der Diffusionsfolie, dies zumindest in Tropfenhöhe. So wird über ein solches Abstandshalte-Gitter bspw. die es überdeckende Metalleindeckung aus dem abgetropften Teil der Feuchtigkeit herausgehalten. Das reduziert Metallfraß.

Aufgabe der Erfindung ist es, den die Metalleindeckung beabstandenden Teil der Diffusionsfolie feuchteabtragsgünstig auszubilden.

Diese Aufgabe ist zunächst und im wesentlichen bei einer Diffusionsfolie mit einem auf einer Folienbreitseite angeordneten Abstandshalte-Gitter mit den Merkmalen des Anspruchs 1 gelöst, wobei darauf abgestellt ist, daß, das Abstandshalte-Gitter aus einem unregelmäßigen Gewirr polydirektionaler, halbstarrer Fäden besteht, die durch ihren schlaufenartig ineinander verflochtenen Verlauf Teilflächen umrahmen, deren Summe ein Vielfaches ist der vom Fadenquerschnitt selbst eingenommenen Teilfläche und in ihrer Größe überwiegend so sind, daß sie oberflächenspannungs-bedingt Wasserhäute speichern. Eine solche Diffusionsfolie läßt sich mit Vorteil als Vordeckung für vor allen Dingen flache bzw. schwach geneigte Dächer nutzen, deren Dachhaut aus einer Metalleindeckung besteht. Die auf der Dachschalung aufliegende Diffusionsfolie hält eingeregnetes Wasser oder von der Innenseite der Metalleindeckung abfallendes Kondenswasser vom Durchtritt ab. Das Gewirr polydirektionaler, halbstarrer Fäden erfüllt dabei nicht nur die Aufgabe der Abstandshalterung, sondern zugleich und in überraschender Weise auch die Funktion eines Zwischenspeichers, um die Feuchte zu besserem Abtrag dem Luftstrom auszusetzen. Verantwortlich für diesen überraschenden Effekt sind in der Gewirr-Strukturmatte zahlreich auftretende "Augen". Es handelt sich um schlaufenartige Rahmen, etwa Brilleneinfassungen vergleichbar. Das an der überlagernden Metalleindeckung niedergeschlagene Kondenswasser verfängt sich dadurch im Gewirr. Das Kondenswasser schlägt also je nach Aufkommen nicht bzw. nicht im wesentlichen, keinesfalls aber in Menge, unter Bildung einer Wasserlache auf die diffusionsoffene Folie durch. Eine solche Wasserlache würde in aller Regel die Diffusionsfähigkeit dämpfen bzw. ungünstigstenfalls auch die Wirkung stark verzögern. Wie weiter gefunden wurde, springen zahlreiche Wasserhäute in den brillenfassungsartigen Ringabschnitten, ähnlich den Seifenwassermembranen, nach und nach. Es kommt dann aber zu einer Art Zerstäubung. Die Wasserhäute stehen ansonsten wie aufgespannte Segel im die Feuchte austragenden Luftstrom. Es ergibt sich ein alsbaldiges Abtragen der Feuchte. Die Strukturmatte wirkt überdies auch noch so, daß trotzdem abgefallene Wassertropfen unter Kapillarwirknng in der Strukturmatte ansteigen. Letztere wirkt praktisch wie Löschpapier. Eine für den geschilderten Zweck anwendbare, das Gewirr stellende Strukturmatte ist markterhältlich unter AKZO-Enkamat7018. Eine vorteilhafte Weiterbildung ist sodann dadurch erreicht, daß in Ergänzung zu den Teilflächen von den Fäden in regelmäßiger Anordnung Käfige gebildet sind, zur oberflächenspannungs-bedingten Speicherung von Wasser. Hierin kommt es zur Fesselung von Feuchte praktisch in Tropfenform. Entsprechende Käfige entstehen vor allem in den Fesselungsbereichen der Fäden des Gewirrs. Demgemäß erweist es sich als vorteilhaft, daß die Fesselungskontaktstellen als Kreuzungs- und/oder Verbindungspunkte jeweils mehrerer Fäden mit der Diffusionsfolie gebildet sind. Zur entsprechenden Verbindung, die auf thermischer Basis geschehen kann, eignet sich eine diffusionsoffene Folie besonders gut, da sich in ihrer vliesähnlichen Struktur eine beste Verankerung ergibt. Zur Anwendung kann die auf dem Markt erhältliche Diffusionsfolie der Bezeichnung Tyvek kommen. Schließlich bringt die Erfindung noch in Vorschlag, daß die Fäden in den Kreuzungs-/Verbindungspunkten untereinander verschweißt und gleichzeitig mit der Folie versiegelt sind. Endlich ist es günstig, daß auch mit Abstand von der Diffusionsfolie liegende Fadenabschnitte zu Festpunkten miteinander verschweißt sind. Das stabilisiert die Strukturmatte, ohne ihre Flexibilität nachteilig zu beeinflussen. So können die Füße aufgelegter Hafte verkippungsfrei zugeordnet werden. Entsprechende Hafte bilden praktisch Verbindungsglieder der aus falzverbundenen Zink- oder Kupferblechplatten gebildeten Metalleindeckung. Auch bleibt die so ausgebildete Diffusionsfolie aufrollbar. Diese Vorratshaltung hat sich auch für die Verlegung als günstig erwiesen.

Der Gegenstand der Erfindung ist nachstehend anhand eines zeichnerisch veranschaulichten Ausführungsbeispieles näher erläutert. Es zeigt:
- Fig. 1: einen Abschnitt der Diffusionsfolie in Draufsicht, und zwar gegen die das Abstandshalte-Gitter tragende Folienbreitseite gesehen,
- Fig. 2: den Schnitt gemäß der Linie II-II in Fig. 1, eingesetzt als Vordeckung mit das Abstandshalte-Gitter überlagernder Metalleindeckung,
- Fig. 3: eine Herausvergrößerung aus Fig. 2, mit darstellerischer Betonung der rahmenartigen Teilflächen, mit darin aufgenommenen Wasserhäuten,
- Fig. 4: den Schnitt gemäß der Linie IV-IV in Fig. 3 und
- Fig. 5: einen Käfig mit oberflächenspannungs-bedingter Speicherung von Wasser.

Der dargestellte Abschnitt einer bahnförmigen Vordekkung eines Daches D besitzt eine Diffusionsfolie 1. Deren eine, obere Folienbreitseite 2 trägt eine Kunststoff-Armierung. Die ist in Art eines Abstandshalte-Gitters G gestaltet.

Abgehalten von der Diffusionsfolie 1 wird hierüber eine Metalleindeckung 3. Letztere besteht aus über Falze miteinander verbundenen Blechplatten aus Zink oder Kupfer (vgl. WO 96/18781).

Die dem Abstandshalte-Gitter G abgewandte, andere Folienbreitseite 4 ruht auf einer nicht dargestellten Dachschalung aus Holz. Über die Bohlenzpalten der Dachschalung besteht Belüftungsanschluß zu einem gleichfalls nicht näher dargestellten Belüftungsraum unter der Dachschalung.

Um das aus einem Gewirr polydirektionaler, halbstarrer Fäden 5 gebildete Abstandshalte-Gitter G so der Diffusionsfolie 1 zuzuordnen, daß ihre Diffusionswirkung möglichst nicht beeinträchtigt ist, steht das Gitter G nur mit einem Bruchteil der Diffusionsfläche in Fesselungskontakt. Realiter nicht einmal 1%. Es liegt eine thermische Fesselung zugrunde unter Nutzung entsprechend wärmeansprechenden Materiales.

Die mit 6 bezeichneten Fesselungspunkte sind erwärmte Flachdrückungen des entsprechend erfaßten Abschnitts der Fäden 5.

Das eine Strukturmatte bildende Gewirr der Fäden 5 ist so, daß es die Fäden durch ihren schlaufenartig ineinander verflochtenen Verlauf randgeschlossen Teilflächen 7 umrahmen. Diese sind schlanken Brillungsfassungen vergleichbar, wobei die unterschiedlichsten Rahmenformen auftreten. Deren Summe oder Flächengröße beträgt ein Vielfaches der vom Faden 5 selbst eingenommen Teilfläche. Der Durchmesser des Fadens 5 beträgt ca. 0,5 mm.

Die umrahmten Teilflächen 7 sind in ihrer Größe oberwiegend so, daß sie oberflächenspannungs-bedingt eine Wasserhaut 8 aufnehmen.

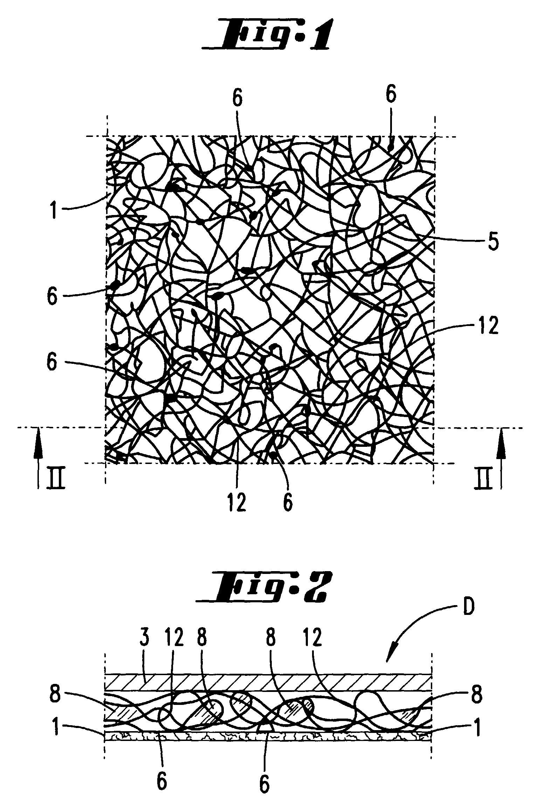

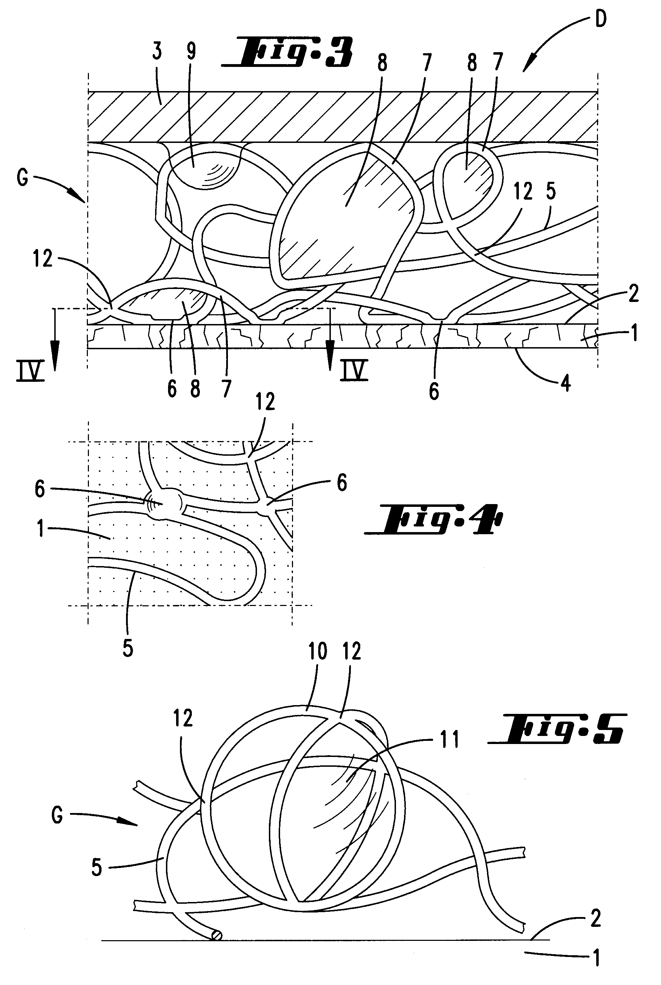

Die so lokalisierte Feuchte zwischen der Unterseite der Metalleindeckung 3 und der einen, oberen Folienbreitseite 2 wird praktisch unbeeinflußt von der Schwerkraft gut verteilt im Labyrinth der Strukturmatte gehalten. Die entsprechende Feuchte kann durch Kondensation entstehen. Die sich an der Unterseite der Metalleindeckung 3 niederschlagende Feuchte nimmt Perlen- bzw. Tropfenform an. Ein solcher Tropfen ist in Fig. 3 dargestellt und dort mit 9 bezeichnet. Die Tropfen 9 verfangen sich in der reichen Gewirr-Struktur des Abstandshalte-Gitters G. Letzteres wird durch die von der Metalleindeckung 3 herrührende Auflast noch etwas dichter. Bspw. reduziert sich die ursprünglich eine Dicke von 10 bis 15 mm aufweisende Strukturmatte dann auf ein Maß von ca. 6 mm. So kommt es rasch zur verfangenden Übernahme der Feuchte in den besagten Teilflächen 7.

Die Wasserhäute 8 bestehen wie aufgespannte Segel in der die Feuchte abtragenden Luftströmung. Der Flachraum zwischen der Unterseite der Metalleindeckung 3 und der Folieribreitseite 2 weist hierzu entsprechend belassene, bspw. peripher liegende Öffnungen in der Dachkonstruktion auf.

Das Gewirr weist außer den beschriebenen Teilflächen 7 auch solche Konstellationen von Abschnitten der Fäden 5 auf, die einen Käfig 10 bilden. Die in Ergänzung zu den Teilflächen 7 in regelmäßiger Anordnung auftretenden Käfige 10 erbringen gleichfalls eine oberflächenspannungs-bedingte Speicherung von Wasser, und zwar etwa in Tropfengröße. Ein solcher gespeicherter Tropfen ergibt sich aus Fig. 5 und ist mit 11 bezeichnet, dargestellt durch Kreisbogen-Schraffen. Solche Tropfen 11 liegen so auch beabstandet zur Metalleindeckung 3, was zu einer Verringerung der Bildung einer Oxydschicht beiträgt.

Die Fesselungskontaktstellen verkörpernden Fesselungspunkte 6 sind als Kreuzungs- und/oder Verbindungspunkte jeweils mehrerer Fäden 5 mit der Diffusionsfolie 2 realisiert. Es sei auf Fig. 4 verwiesen.

Ein reiner Kreuzungspunkt geht aus Fig. 5 hervor und ist dort mit 12 verbunden. Sein Fesselungskontakt beruht auf einer thermischen Verbindung, indem die Abschnitte der Fäden 5 praktisch aneinander geschmolzen/geschweißt sind. Das gibt dem Abstandshalte-Gitter G eine gute, homogen verteilte Festigkeit. Die Verbindungen erstrecken sich auf nahezu sämtlichen Ebenen. Die Strukturmatte fällt dadurch recht flexibel aus. Dadurch fallen die zwischen den Kreuzungs- und/oder Verbindungspunkten 12 sich erstreckenden freien Abschnitte relativ kurz aus. Es entstehen keine längeren, flottierenden Abschnitte solcher Fäden 5, die die Gefahr einer Verhakung brächten- Fertigungsvorteilhaft ist es, daß schon bei der Herstellung die Fäden 5 in den Kreuzungs-/Verbindungspunkten untereinander verschweißt und gleichzeitig mit der Folie 1 versiegelt werden, wobei zugleich auch die mit Abstand von der Diffusionsfolie 1 liegenden Fadenabschnitte zu Festpunkten miteinander verschweißt werden.

Die Strukturmatte ist ein kompressibles Polyamid-Monofilament-Gelege. Seine Rohdichte beträgt 25 kg/m³. Der Schmelzpunkt dieses Materiales liegt bei 218°C. Das Material ist temperaturbeständig von 30°C bis 100°C und daher ideal ausgewählt für die beschriebene Verwendung.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Diffusionsfolie (1), insbesondere in Form einer Unterspannbahn für Dächer (D), mit auf einer Folienbreitseite (2) angeordneter Kunststoff-Armierung, welche in Art eines Abstandshalte-Gitters (G) gestaltet ist, das nur mit einem Bruchteil der Diffusionsfläche in Fesselungskontakt zu diesem steht, dadurch gekennzeichnet, daß das Abstandshalte-Gitter (G) aus einem unregelmäßigen Gewirr polydirektionaler, halbstarrer Fäden (5) besteht, die durch ihren schlaufenartig ineinander verflochtenen Verlauf Teilflächen (7) umrahmen, deren Summe ein Vielfaches ist der vom Fadenquerschnitt selbst eingenommenen Teilfläche, und in ihrer Größe überwiegend so sind, daß sie oberflächenspannungs-bedingt Wasserhäute (8) speichern.

2. Diffusionsfolie nach Anspruch 1 oder insbesondere danach, dadurch gekennzeichnet, daß in Ergänzung zu den Teilflächen (7) von den Fäden (5) in regelmäßiger Anordnung Käfige (10) gebildet sind zur oberflächenspannungsbedingten Speicherung von Wasser.

3. Diffusionsfolie nach Anspruch 1 oder insbesondere danach, dadurch gekennzeichnet, daß die Fesselungskontaktstellen (6) als Kreuzungs- und/oder Verbindungspunkte (12)jeweils mehrerer Fäden (5) mit der Diffusionsfolie (1) gebildet sind.

4. Diffusionsfolie nach einem oder mehreren der vorhergehenden Ansprüche oder insbesondere danach, dadurch gekennzeichnet, daß die Fäden (5) in den Kreuzungs-/Verbindungspunkten (12) untereinander verschweißt und gleichzeitig mit der Folie (1) versiegelt sind.

5. Diffusionsfolie nach einem oder mehreren der vorhergehenden Ansprüche oder insbesondere danach, dadurch gekennzeichnet, daß auch mit Abstand von der Diffusionsfolie (1) liegende Fadenabschnitte zu Festpunkten miteinander verschweißt sind.
